Europäisches Patentamt

European Patent Office

Office européen des brevets

(19)

(11) **EP 0 781 652 A2**

(12) **EUROPÄISCHE PATENTANMELDUNG**

(43) Veröffentlichungstag:
**02.07.1997 Patentblatt 1997/27**

(51) Int. Cl.⁶: **B32B 27/32**, B32B 27/20, B32B 7/06

(21) Anmeldenummer: 96120249.6

(22) Anmeldetag: **17.12.1996**

(84) Benannte Vertragsstaaten:
**AT BE CH DE ES FI FR GB IE IT LI NL**

(30) Priorität: **27.12.1995 DE 19548789**

(71) Anmelder: **Hoechst Trespaphan GmbH**
**66539 Neunkirchen-Wellesweiler (DE)**

(72) Erfinder:
• **Dries, Thomas, Dr.**
**55270 Schwabenheim (DE)**
• **Höppenstein, Lothar DI.**
**65345 Eltville (DE)**
• **Wilhelm, Adolf**
**65199 Wiesbaden (DE)**

(54) **Peelfähige, siegelbare polyolefinische Mehrschichtfolie, Verfahren zu ihrer Herstellung und ihre Verwendung**

(57) Es wird eine peelfähige, orientierte, opake Polyolefin-Mehrschichtfolie aus mindestens einer opaken Basisschicht und einer peelfähigen Deckschicht beschrieben. Zwischen der opaken Basisschicht und der peelfähigen Deckschicht eine weiche Zwischenschicht angebracht ist.

**Beschreibung**

Die vorliegende Erfindung betrifft eine peelfähige, orientierte, opake, coextrudierte Polyolefin-Mehrschichtfolie aus mindestens drei coextrudierten Schichten.

Die Erfindung betrifft ferner ein Verfahren zur Herstellung der peelfähigen Mehrschichtfolie sowie ihre Verwendung.

Polyolefinfolien finden als Verpackungsfolien breite Anwendung. Der Erfolg dieser Materialien beruht auf den guten optischen und mechanischen Eigenschaften sowie auf der einfachen Verschweißbarkeit der Folien. Neben dem Verschweißen hat das Siegeln von Folien zunehmend an Bedeutung gewonnen. Siegelfähige Folien besitzen bevorzugt eine Deckschicht aus einem Polymeren, das einen niedrigeren Kristallitschmelzpunkt besitzt als das Polymere der Basisschicht der Folie. Zum Siegeln werden die Folienlagen übereinandergelegt und nur 10 bis 20°C unter den Kristallitschmelzpunkt erwärmt, d. h. die Deckschichten werden nicht vollständig aufgeschmolzen. Die erzielte Haftung der Siegelschichten ist wesentlich geringer als beim Verschweißen des gleichen Materials, jedoch für viele Anwendungen ausreichend (Kunststoff-Handbuch, Band IV, Carl Hanser Verlag München, 1969, Seiten 623 bis 640).

Die Siegelnähte haben in vielen Fällen eine höhere mechanische Festigkeit als die Folien selbst, so daß beim Öffnen einer versiegelten Folienpackung diese nicht nur in der Siegelnaht aufgerissen und zerstört wird, sondern vielmehr der Riß sich in der Folie selbst fortsetzt und dann unkontrolliert weiter reißt. Aus diesem Grund werden anstelle von siegelfähigen Rohstoffen auch sogenannte peelfähige Deckschichten auf Folienoberflächen aufgebracht. Die peelfähigen Deckschichten bieten einerseits gute Siegeleigenschaften, aber gleichzeitig auch die Möglichkeit, die Siegelnaht wieder kontrolliert zu öffnen, ohne die gesiegelten Materialien zu zerstören. Diese Öffnung der Peelnaht erfolgt unter Kohäsionsbruch in der Peelschicht, der idealerweise nur in der Peelschicht erfolgt.

Peelfähige Rohstoffe sind im Stand der Technik bekannt. Beispielsweise beschreibt das Produktdatenblatt "Novolen VP 9201" ein olefinisches Polymeres, welches zur Herstellung von peelbaren, coextrudierten Siegelschichten auf Polypropylenfolien geeignet ist. Die Siegel-/Peelschichten sind glänzend bis seidenmatt und werden vorwiegend auf pigmentierten/opaken Trägerschichten verwendet.

Die US-A-4,666,778 beschreibt transparente, peelfähige Folien mit einer guten Siegelnahtfestigkeit und mit einer niedrigen Trübung. Die peelfähige Deckschicht besteht aus einem Polymergemisch aus ethylenischen Polymeren oder ethylenischen Copolymeren mit geringen Mengen von Propylenpolymeren und Butylenpolymeren. Die gute Transparenz der Folien ist für manche Anwendungszwecke günstig, aber nicht immer erwünscht.

Im Stand der Technik sind auch nicht transparente, sogenannte opake oder transluzente Folien bekannt, welche je nach der aufgebrachten Deckschicht, siegelfähig oder nicht siegelfähig sein können.

Opake Folien enthalten in mindestens einer Schicht Pigmente oder vakuoleniniziierende Teilchen bzw. eine Kombination aus diesen, wodurch die Folien im Vergleich zu transparenten Folien eine deutlich reduzierte Lichtdurchlässigkeit haben. "Opake Folie" bedeutet im Sinne der vorliegenden Erfindung eine undurchsichtige Folien, deren Lichtdurchlässigkeit nach ASTM D 1003-77 höchstens 70, vorzugsweise höchstens 50 %, beträgt.

Vakuoleniniziierende Teilchen sind Teilchen, welche mit der Polymermatrix unverträglich sind und beim Verstrekken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 0,02 bis 10 μm.

Die EP-A-0 083 495 beschreibt eine opake, biaxial orientierte Folie mit satiniertem Aussehen und einem Oberflächenglanz von größer als 100 %, die mindestens einen kugelförmigen Feststoffpartikel je Vakuole enthält. Des weiteren umfaßt die Folie auf beiden Oberflächen der Kernschicht eine porenfreie, transparente, thermoplastische Mantelschicht, die eine die Optik der Folie bestimmende Dicke aufweist. Als Material für den Feststoffpartikel wird z.B. Nylon angegeben. Die Teilchen haben in der Regel einen Durchmesser, der größer als 1 μm ist. Auch bei dieser Folie wird die Opazität hauptsächlich durch die Menge der Feststoffpartikel und die Verfahrensparameter bei der biaxialen Orientierung bestimmt.

Die EP-A-0 475 110 beschreibt biaxial orientierte weiße Folien mit einer Trägerschicht auf Basis von Polypropylenpolymeren und ein- oder beidseitigen Deckschichten. Die Trägerschicht enthält beschichtete $TiO_2$-Teilchen, deren Beschichtung mindestens ein anorganisches Oxid und mindestens eine organische Verbindung aufweist. Die Folien zeichnen sich durch gute mechanische Eigenschaften und einen hohen und dauerhaften Weißgrad aus.

Die EP-A-0 538 747 beschreibt biaxial orientierte Polypropylenfolien mit einer matten Deckschicht. Die Deckschicht besteht aus Propylenco- und/oder -terpolymeren und einem HDPE. Die Folien zeichnen sich durch einen geringen Glanz und eine hohe Trübung aus, wodurch das matte Erscheinungsbild gewährleistet wird.

Die EP-A-0 367 613 beschreibt eine opake Folie mit einer vakuolenhaltigen Schicht und einer Deckschicht mit einer rauhen, beschriftbaren Oberfläche. Die Deckschicht enthält ein erstes Polymer mit einem MFI von 1 g/10 min und ein zweites Polymer, welches mit dem ersten unverträglich ist.

EP 0 781 652 A2

Die US 5,500265 beschreibt eine peelfähige Folie

Die Beschichtung besteht aus einem Acryl-Polymeren oder einem Polyvinylidenchlorid-Polymeren. An dieser Folie ist nachteilig, daß der Verschnitt nicht dem wieder als Recyclat zurückgeführt werden kann. Sie ist teuer in der Herstellung, da die Beschichtung in einem separaten Arbeitsschritt nach der Herstellung der Folie erfolgen muß und meistens einen zusätzlichen Haftvermittler erfordert. Es ist beschrieben, daß die Folie zwischen der Deckschicht aus Butylen-Polymeren und der Acrylat-Beschichtung peelt. Dadurch hinterläßt die Beschichtung unerwünschte Reste auf dem Substrat. Dieser Effekt ist insbesondere bei Joghurt Becher besonders unerwünscht.

Es hat sich gezeigt, daß die opaken Trägerfolien zur Aufbringung von Peelschichten nur bedingt geeignet sind. Opake Folien mit Peelschichten zeigen bei speziellen Anwendungen schwerwiegende Nachteile. Insbesondere beim Einsatz als Deckelfolien für Lebensmittelbehältnisse treten Probleme auf, die im Zusammenhang mit der vakuolenhaltigen Struktur stehen. Die Deckelfolie hinterläßt nach dem Abziehen vom Behältnis fetzenartige weiße Häutchen am Prägerand des Behälters auf den die Folie aufgeschweißt wurde. Es wurde im Rahmen von Untersuchungen zu der vorliegenden Erfindung gefunden, daß diese Folienreste am Behälterrand durch die mangelhafte Weiterreißfestigkeit der Folie verursacht werden. Beim Abziehen der Deckelfolie reißt wie vorgesehen die Peelschicht auf, aber danach setzt sich dieser Riß unkontrolliert in den anderen Schichten der Folie fort. Dadurch bleiben Folienreste am Behälterrand hängen, welche vom Verbraucher nicht ohne weiteres identifiziert werden können und unter Umständen Ekelgefühle erregen. Aus Marketinggründen sind solche Effekte nicht akzeptabel. Die bekannten opake Folien mit Peelschichten können daher für diese Anwendung kaum eingesetzt werden.

Es ist bekannt die Weiterreißfestigkeit von opaken peelfähigen Folien dadurch zu erhöhen, daß zur Opazifizierung der Folie nur Pigmente als Füllstoffe zugesetzt werden, welche keine Vakuolen erzeugen. Diese Lehre ist in der europäischen Anmeldung mit der Anmeldenummer P 44 24 604.8-16 beschrieben. Es hat sich jedoch gezeigt, daß diese Maßnahme nicht ausreichend ist. Trotzdem die innere Festigkeit dieser Folie höher ist, als bei einer Folie mit Vakuolen, reicht die Weiterreißfestigkeit nicht aus, um die beschriebene Häutchenbildung bei der Verwendung als Deckelfolie immer zu vermeiden.

Im Rahmen der Untersuchungen zur vorliegenden Erfindung wurde gefunden, daß die Häutchenbildung vermieden werden kann, wenn die Peelschicht in einer Dicke von mehr als 5 μm aufgetragen wird. Diese Lösung der Probleme ist jedoch nicht vorteilhaft, da daß Peelmaterial sehr teuer ist. Dicke Schichten aus Peelrohstoff verteuern die Folie derartig, daß sie nicht mehr zu einem marktfähigem Preis angeboten werden kann. Darüberhinaus ist es bei dicken Peelschichten sehr schwierig die Nahtfestigkeiten an verschiedene Anwendungen anzupassen.

Die Aufgabe der vorliegenden Erfindung bestand darin, eine opake, peelfähige Folie zur Verfügung zu stellen, welche sich zur Verwendung als Deckelfolie für Lebensmittelbehältnisse eignet. Insbesondere soll die Folie nach dem Verschweißen auf dem Prägerand des Behälters sauber abzuziehen sein, d.h die Folie darf keine Häutchen oder sonstige Folienreste hinterlassen. Dabei dürfen die anderen Folieneigenschaften, welche im Hinblick auf die genannte Verwendung gefordert sind nicht beeinträchtigt werden. Insbesondere muß die Folie nach wie vor eine ausreichende Siegel- oder Peelnahtfestigkeit aufweisen und ihre Optik insbesondere bezüglich Opazität und Weißgrad darf nicht nachteilig beeinflußt werden.

Die der Erfindung zugrundeliegende Aufgabe wird gelöst durch eine Mehrschichtfolie der eingangs genannten Gattung, deren kennzeichnende Merkmale darin bestehen, daß daß sie den folgenden Schichtaufbau umfaßt:

a) eine opake Basisschicht und
b) eine peelfähige Deckschicht die mindestens zwei unverträgliche olefinische Polymere in einerMenge von mindestens 70 Gew.-%, bezogen auf das Gewicht der Deckschicht, enthält und
c) eine weiche Zwischenschicht die zwischen der Basisschicht und der peelfähigen Deckschicht angebracht ist.

Es wurde gefunden, daß bei coextrudierten Peel-Folien mit einer polyolefinischen Peelschicht Delaminierung und Rückstände auf dem Substrat nur dann erfolgreich vermieden werden können, wenn eine weiche und flexible Zwischenschicht unter der Peel-Schicht angebracht ist.

"Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die erfindungsgemäße Peel-Folie ist peelfähig ohne Acrylat Polmer und ohne Polyvinyliden Polymer und vermeidet daher die damit verbundenen Nachteile. Die Folie peelt zwischen der äußersten Deckschicht und dem Substrat. Die Folie peelt nicht zwischen den coextrudierten Schichten, wodurch Reste und Folienrückstände auf dem Substrat erfolgreich und überraschend vermieden werden.

Die opake Basisschicht der erfindungsgemäßen Mehrschichtfolie enthält im wesentlichen ein Polyolefin, vorzugsweise ein Propylenpolymer, und opak machende Füllstoffe sowie gegebenfalls weitere Additive in jeweils wirksamen Mengen. Im allgemeinen enthält die Basisschicht mindestens 50 Gew.-%, vorzugsweise 60 bis 99 Gew.-%, insbesondere 70 bis 98 Gew.-%, des Polyolefins, jeweils bezogen auf das Gewicht der Schicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 0,5 bis 8 g/10 min, vorzugsweise 2 bis 5 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit C$_4$-C$_8$--Olefinen mit einem -Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält Füllstoffe in einer Menge von maximal 40 Gew.-%, vorzugsweise 1 bis 30 Gew.-%, insbesondere 2 bis 20 Gew.-%, bezogen auf das Gewicht der opaken Schicht. Füllstoffe sind im Sinne der vorliegenden Erfindung Pigmente und/oder vakuoleniniziierende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden eingesetzt, wie er üblicherweise als Überzug für TiO$_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z.B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. TiO$_2$-Partikel mit einem Überzug werden z.B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den TiO$_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g TiO$_2$-Teilchen, enthalten. Als besonders vorteilhaft hat es sich erwiesen, wenn die TiO$_2$-Teilchen mit Al$_2$O$_3$ oder mit Al$_2$O$_3$ und Polydimethylsiloxan beschichtet sind.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe der festen Teilchen und den Streckbedingungen wie Streckverhältnis und Strecktemperatur abhängig sind. Die Vakuolen reduzieren die Dichte geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 μm, um zu einer effektiven, d.h. opak machenden Menge an Vakuolen zu führen. Im allgemeinen beträgt der mittlere Teilchendurchmesser der Teilchen 1 bis 6 μm, vorzugsweise 1,5 bis 5 μm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. "Unverträgliche Materialien bzw. unverträgliche Polymere″ im Sinne der vorliegenden Erfindung bedeutet, daß das Material bzw. das Polymere in der Folie als separates Teilchen bzw. als separate Phase vorliegt.

Die Basisschicht enthält Pigmente in einer Menge von 0,5 bis 10 Gew.-%, vorzugsweise 1 bis 8 Gew.-%, insbesondere 1 bis 5 Gew.-%. Vakuoleniniziierende Füllstoffe sind in einer Menge von 0,5 bis 25 Gew.-%, vorzugsweise 1 bis 15 Gew.-%, insbesondere 1 bis 10 Gew.-% enthalten.

Die erfindungsgemäße Mehrschichtfolie umfaßt mindestens eine zwischen der opaken Basisschicht und der peelfähigen Deckschicht aufgebrachte Zwischenschicht. Erfindungsgemäß ist diese Zwischenschicht aus Polyolefinen aufgebaut, welche "weicher″ als die Polyolefine der Basisschicht sind. Kriterien für die Auswahl eines weichen Materials sind der Schmelzpunkt Tm, die Glasübergangstemperatur Tg oder die Kristallinität oder auch die Shore-Härte der Polyolefine.

Für kristalline Polyolefine gilt, daß das weichere Polyolefin der Zwischenschicht einen niedrigeren Schmelzpunkt Tm als das Polyolefin der Basisschicht haben soll. Für amorphe Polyolefine gilt in analoger Weise, daß die Glasübergangstemperatur Tg des Polyolefins der Zwischenschicht kleiner als die Tg des Polyolefins der Basisschicht ist. Tm bzw. Tg sollten sich vorteilhafter Weise um mindestens 10°C unterscheiden. Vorzugsweise ist Tm oder Tg des Zwischenschichtpolyolefins 15 bis 60°C, insbesondere 30 bis 50°C kleiner als Tm oder Tg des Polyolefins der Basisschicht.

Im allgemeinen hat das Polyolefin der Zwischenschicht einen Schmelzpunkt von höchstens 165°C, vorzugsweise 80 bis 140°C, insbesondere 100 bis 135°C. Im allgemeinen enthält die Zwischenschicht mindestens 80 Gew.%, vorzugsweise 90 bis 100 Gew.-%, insbesondere 95 bis 99 Gew.-% jeweils bezogen auf das Gewicht der Zwischenschicht des weicheren Polyolefins. Gegebenenfalls können der Zwischenschicht Additive in jeweils wirksamen Mengen zugesetzt werden.

Als weiche Polyolefine mit einem niedrigerem Schmelzpunkt sind für die Zwischenschicht Polyolefine aus Olefinen mit 2 bis 10 C-Atomen geeignet, worunter die nachstehend aufgeführten Polymeren aus Ethylen-, Propylen-, und Butyleneinheiten bevorzugt sind. Weiche Polyolefine der Zwischenschicht sind vorzugsweise

Hmopolymere aus Ethylen
Copolymere von

    Ethylen und Propylen oder
    Ethylen und Butylen oder
    Propylen und Butylen oder
    Ethylen und einem anderen -Olefin mit 5 bis 10 Kohlenstoffatomen oder
    Propylen und einem anderen -Olefin mit 5 bis 10
    Kohlenstoffatomen oder

Terpolymere von

    Ethylen und Propylen und Butylen oder
    Ethylen und Propylen und einem anderen -Olefin mit 5 bis 10 Kohlenstoffatomen oder

Mischungen aus zwei oder mehreren der genannten Homo-, Co- und Terpolymeren oder
ein Blend aus zwei oder mehreren der genannten Homo-, Co- und
Terpolymeren, gegebenenfalls gemischt mit einem oder mehreren der genannten Homo-, Co- und Terpolymeren.

Besonders bevorzugt sind

Copolymere von

    Ethylen und Propylen oder
    Ethylen und Butylen-1 oder
    Propylen und Butylen-1 oder aus

Terpolymere von

    Ethylen und Propylen und Butylen-1 oder aus

Mischungen aus zwei oder mehreren der genannten besonders bevorzugten Homo-, Co- und Terpolymeren oder aus einem Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

vorteilhaft sind.

Die vorstehend beschriebenen Co- und Terpolymeren weisen im allgemeinen einen Schmelzflußindex von 1,5 bis 30 g/10 min, vorzugsweise von 3 bis 15 g/10 min, auf. Das vorstehend beschriebene Blend aus Co- und Terpolymeren hat einen Schmelzflußindex von 5 bis 9 g/10 min, wobei die angegebenen Schmelzflußindices bei 230°C und einer Kraft von 21,6 N (DIN 53735) gemessen werden. Die Schmelztemperatur liegt im allgemeinen in einem Bereich von 120 bis 140°C.

Die genannten Polyethylene haben bevorzugt einen Ethylengehalt von 80 bis 100 Gew.-%, vorzugsweise 95 bis 100 Gew.-%. Insbesondere sind HDPE, LDPE, LLDPE und ähnliche geeignet.

Von den vorstehend genannten weichen Polyolefinen der Zwischenschicht sind diejenigen bevorzugt welche zusätzlich eine niedrige Kristallinität von weniger als 40 Gew.-%, vorzugsweise 10 bis 30 Gew.-% aufweisen. Insbesondere sollte die Kristallinität des weichen Polyolefins niedriger als die Kristallinität des Polyolefins der Basisschicht sein.

Überraschenderweise zeigen peelfähige opake Folien mit einer Zwischenschicht aus weichen olefinischen Polymeren eine deutlich verbesserte Weiterreißfestigkeit und verbesserte Peeleigenschaften. Folien mit diesem speziellen Schichtaufbau lassen sich hervorragend als Deckelfolien für Lebensmittelbehältnisse verwenden. Sie zeigen zum einen eine verbesserte Nahtfestigkeit, wenn sie auf Behältnisse aus Polyolefin, vorzugsweise Polypropylen gesiegelt werden und dennoch läßt sich die Folie völlig unerwartet ohne die Bildung der unerwünschten Häutchen abziehen. Jeder Fachmann hätte erwartet, daß bei einer Verbesserung der Nahtfestigkeit die Folie noch stärker zum Einreißen beim Peelen neigt und die unerwünschten Häutchen verstärkt auftreten. Erstaunlicherweise ist dies nicht der Fall. Es wird vermutet, daß das weiche niedrigerschmelzende Material der Zwischenschicht eine weiche puffernde Zone zur Peelschicht bildet, welche auf doppelte Weise günstig wirkt. Zum einen ist die Verankerung der Peelschicht auf der Zwischenschicht besser und zum anderen wird die Peelschicht von der opaken Basisschicht entkoppelt. Dadurch ist die Peelschicht, welche eine niedrige Einreißfestigkeit, aber eine vergleichsweise höhere Weiterreißfestigkeit hat, von der opaken Basisschicht mit einer geringeren Weiterreißfestigkeit als die Peelnaht entkoppelt. Beim Öffnen der Peelnaht reißt die Folie wie vorgesehen in der Peelschicht ein, aber dieser Riß pflanzt sich nicht mehr in der Basisschicht der Folie weiter. Das bedeutet, daß die Zwischenschicht die Rißfortpflanzung in die Basisschicht erfolgreich verhindert, trotzdem die Basisschicht nach wie vor schwächstest Glied der Kette ist, d.h. die geringste Weiterreißfestigkeit aufweist. Diese Wirkung ist so effektiv, daß in dem erfindungsgemäßen Schichtaufbau der Folie überraschenderweise auch eine vergleichsweise mechanisch instabile Basisschicht mit Vakuolen eingesetzt werden kann, ohne daß Rißfortpflanzung und Häutchenbildung am Becherrand auftreten.

Der erfindungsgemäße Effekt wird nur mit einer weichen Zwischenschicht erreicht, die aus Polyolefinen mit niedrigerem Schmelzpunkt oder niedrigerer Tg aufgebaut sind. Eine Zwischenschicht aus den gleichen oder höher schmelzenden Polypropylenhomopolymer wie die Basisschicht hat keine verbessernde Wirkung auf die Weiterreißfestigkeit der Folie und auf das Problem der Häutchenbildung.

In einer weiteren vorteilhaften Ausführungsform werden die in der opaken Schicht und/oder Zwischenschicht eingesetzten Propylenpolymeren durch den Zusatz von organischen Peroxiden teilabgebaut. Ein Maß für den Grad des Abbaus des Polymeren ist der sogenannte Abbaufaktor A, welcher die relative Änderung des Schmelzflußindex nach DIN 53735 des Polypropylens, bezogen auf das Ausgangspolymere, angibt.

$$A \frac{MFI_2}{MFI_1}$$

MFI$_1$ =     Schmelzflußindex des Propylenpolymers vor dem Zusatz des organischen Peroxids
MFI$_2$ =     Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Folie umfaßt neben der opaken Basisschicht und der erfindungsgemäßen Zwischenschicht mindestens eine peelfähige Deckschicht. Die Deckschicht ist im Sinne der vorliegenden Erfindung eine außenliegende Schicht, so daß die äußere Oberfläche der Deckschicht eine der beiden Folienoberflächen bildet.

Die peelfähige Deckschicht der erfindungsgemäßen Mehrschichtfolie enthält im allgemeinen eine im folgenden näher beschriebene Mischung bzw. ein Blend aus mindestens zwei unverträglichen olefinischen Polymeren (Komponenten I und II) und gegebenenfalls zugesetzte Additive. "Unverträglich" bedeutet im Sinne der vorliegenden Erfindung, daß beide Komponenten zwei getrennt vorliegende Phasen bilden. Im allgemeinen enthält die Deckschicht mindestens 70 Gew.-%, vorzugsweise 75 bis 100 Gew.-%, insbesondere 90 bis 98 Gew.-%, der besagten Mischung sowie gegebenenfalls übliche Additive in jeweils wirksamen Mengen. Die vorstehenden Angaben in Gew.-% beziehen sich auf das Gewicht der Deckschicht.

Die Komponente I der peelfähigen Deckschichtmischung bzw. des Blends ist beispielsweise

ein Copolymer von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10
Kohlenstoffatomen oder

ein Terpolymer von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und
Terpolymeren, gegebenenfalls gemischt mit einem oder mehreren der genannten Homo-, Co- und Terpolymeren.

Besonders bevorzugt besteht die Komponente I im wesentlichen aus

einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus einem Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53735) gemessen.

Die Komponente II der peelfähigen Deckschichtmischung ist ein mit den vorstehend beschriebenen olefinischen Polymeren unverträgliches Polymer, das überwiegend aus Ethylensequenzen aufgebaut ist. "Unverträgliches Polymer" bedeutet im Sinne der vorliegenden Erfindung, daß das unverträgliche Polymer als separate Phase neben dem olefinischen Polymer vorliegt. Bevorzugt sind HDPE, MDPE, LDPE, LLDPE, VLDPE. Im allgemeinen enthalten diese Ethylenpolymeren einen geringen Anteil von < 10 Gew.-%, vorzugsweise 1 bis 8 Gew.-%, Comonomer. Als Comonomere sind Olefine mit 3 bis 10 C-Atomen geeignet, wobei Propen, 1-Buten und/oder 1-Hexen als Comonomere bevorzugt sind.

Das Blend oder die Mischung der unverträglichen Komponenten I und II zeigt im allgemeinen in einem mittels DSC aufgenommenen Schmelzdiagramm zwei separate Schmelzpeaks. Der erste Schmelzpeak liegt im Bereich von 105 bis 135°C, der zweite Schmelzpeak liegt im Bereich von 120 bis 140°C.

Das Verhältnis (Gewichtsverhältnis) der beiden unverträglichen Polymeren I und II der Deckschichtmischung bzw. des Blends kann je nach der gewünschten Peelkraft innerhalb weiter Grenzen variieren. Bevorzugt liegt das Verhältnis der Komponenten I und II in einem Bereich von I:II = 5:95 bis I:II = 95:5, vorzugsweise zwischen I:II = 30:70 bis I:II = 70:30, insbesondere bei I:II = 50:50.

Die erfindungsgemäße Folie ist mindestens dreischichtig und umfaßt als wesentliche coextrudierten Schichten immer die opake Basisschicht mindesters eine weiche Zwischenschicht aus Polyolefin und zumindest eine peelfähige Deckschicht. Die Auswahl der Anzahl der Schichten hängt in erster Linie von dem vorgesehenen Einsatzzweck ab, wobei vier- und fünfschichtige Ausführungsformen besonders bevorzugt sind. Insbesondere ist ein vierschichtiger Aufbau bevorzugt, bei welchem die opake Schicht die Basisschicht der Folie bildet und beidseitig auf den Oberflächen von Basis- und Zwischenschicht Deckschichten aufgebracht sind.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 5 bis 200 $\mu$m, wobei 10 bis 100 $\mu$m, insbesondere 20 bis 80 $\mu$m, bevorzugt sind.

Die Dicke der weichen Zwischenschicht beträgt im allgemeinen 2 bis 12 $\mu$m, wobei 3 bis 8 $\mu$m, insbesondere 3 bis 6 $\mu$m, bevorzugt sind. Es hat sich erwiesen, daß eine Schichtdicke der Zwischenschicht von über 2 um günstig auf die gewünschtene Erfindungsgemäßen Effekte wirkt.

Die Dicke der peelfähigen Deckschicht wird unabhängig von anderen Schichten gewählt und liegt bevorzugt im Bereich von 0,5 bis 4,5 μm, insbesondere 0,8 bis 3 μm, vorzugsweise 0,5 bis 2 μm.

Die andere Deckschicht, welche gegebenenfalls auf der gegenüberliegenden Seite aufgebracht ist hat eine Dicke von 0,1 bis 5 μm, vorzugsweise 0,1 bis 2 μm, insbesondere 0,1 bis 1,0 μm.

Die Basisschicht ist im Sinne der vorliegenden Erfindung diejenige Schicht, welche mehr als 50 % der Gesamtdicke der Folie ausmacht. Ihre Dicke ergibt sich aus der Differenz von Gesamtdicke und der Dicke der aufgebrachten Deck- und Zwischenschicht/en und kann daher analog der Gesamtdicke innerhalb weiter Grenzen variieren. Deckschichten bilden die äußerste Schicht der Folie.

Um bestimmte Eigenschaften der erfindungsgemäßen Polypropylenfolie noch weiter zu verbessern, können sowohl die Basisschicht als auch die Zwischenschicht/en und die Deckschicht/en Zusätze in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Kernschicht und der Deckschicht/en verträglich sind, mit Ausnahme der in der Regel unverträglichen Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt der/den Basis- und/oder Zwischenschicht/en zugesetzt. Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 100 und 180°C (gemessen nach DIN 1995-U4, entspricht ASTM E-28), vorzugsweise über 120 bis 160°C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, -Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135°C eingesetzt (bei den ungesättigten Polymerisaten ist das hydrierte Produkt bevorzugt). Ganz besonders bevorzugt werden die Cyclopentadienpolymerisate mit einem Erweichungspunkt von 140°C und darüber in den Zwischenschichten eingesetzt.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit -Hydroxy-$(C_1$-$C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,7 Gew.-%. Für die vorliegende Erfindung ist es insbesondere bevorzugt, der/den Deckschichten tertiäre aliphatische Amine in einer Menge von 0,4 bis 0,6 Gew.-% zuzusetzen. ®Armostat 600 ist ein besonders bevorzugtes Antistatikum.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s.

Als Stabilisatoren können die üblichen stabilisierend wirkenden Verbindungen für Ethylen-, Propylen- und andere -Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt der/den Deckschicht/en zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 7 Gew.-%, vorzugsweise 0,5 bis 5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und gegebenenfalls an der zur Coronabehandlung vorgesehenen Oberflächenschicht entsprechend flammbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90°C zu halten, bevorzugt 20 bis 60°C.

Darüber hinaus wird die Längsstreckung vorteilhafterweise bei einer Temperatur von weniger als 140°C, vorzugsweise im Bereich von 125 bis 135°C, und die Querstreckung bei einer Temperatur größer 140°C, vorzugsweise bei 145 bis 160°C, durchgeführt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäße Mehrschichtfolie zeichnet sich durch eine gute Peelnahtfestigkeit und Weiterreißfestigkeit aus. Gleichzeitig läßt sich die Folie hervorragend peelen. Überraschenderweise kommt es dabei nicht zur Bildung von Häutchen aus Folienresten auf dem Behälterrand.

Ferner verfügt die Folie über eine niedrige Lichtdurchlässigkeit im Bereich der UV-Strahlung von 200 bis 380 nm. Sie liegt unterhalb von 5 %, bevorzugt unterhalb von 2 % und ist für die Verpackung lichtempfindlicher Lebensmittel wie z.B. Molkereiprodukte unabdingbar.

Wichtig ist ferner eine niedrige Siegelanspringtemperatur, um hitzeempfindliche Lebensmittel schonend verpacken zu können. Der Peelrohstoff sollte daher gegen sich selbst bei einer Temperatur unterhalb von 130°C, bevorzugt unterhalb von 115°C, siegeln.

Es wurde gefunden, daß die peelfähige Deckschicht nicht nur gegen sich selbst und gegen übliche siegelfähige Deckschichten aus Propylenco- und/oder -terpolymeren siegelt. Überraschenderweise läßt sich die Folie auch sehr gut gegen Oberflächen aus Propylenhomopolymeren siegeln, welche selbst weder gegen sich selbst noch gegen übliche Siegelschichten gesiegelt werden können. Damit ist es möglich, die erfindungsgemäße Folie als Deckelverschluß für Behältnisse aus Propylenhomopolymer zu verwenden und somit Einstoffverpackungen aus Polypropylen auch bei Behältnissen mit Deckelverschlüssen wie Joghurtbecher usw. anzubieten.

Die Erfindung wird nunmehr durch die nachfolgenden Beispiele erläutert.

Beispiel 1

Nach dem Coextrusionsverfahren wurde aus einer Breitschlitzdüse bei einer Extrusionstemperatur von 260°C als Summe eine Vierschichtfolie mit einem Schichtaufbau ABCD extrudiert, d. h. auf die Basisschicht B war die Deckschicht A und die Zwischenschicht C aufgebracht. Auf die Zwischenschicht C wurde die Deckschicht D extrudiert. Die Deckschicht D wurde coronabehandelt.

Die wesentlichen Komponenten der Basisschicht B waren:

92,70 Gew.-%   Propylenhomopolymerisat (PP) mit einem n-heptanlöslichen Anteil von 4,5 Gew.-% (bezogen auf 100 % PP) und einem Schmelzpunkt von 165°C; der Schmelzflußindex des Propylenhomopolymeren liegt bei 3,2 g/10 min bei 230°C und 21,6 N Belastung (DIN 53 735);

7,15 Gew.-%   $TiO_2$ über Masterbatch ®P 8555 LM, Lieferant Firma Schulman GmbH, Hüttenstraße 211, D-54578 Kerpen;

0,15 Gew.-%   N,N-bis(2-hydroxyethyl)-($C_{10}$-$C_{20}$)-alkylamin (®Armostat 300).

Die Zwischenschicht C bestand aus

100 Gew.-%   eines statistischen Ethylen-Propylen-Copolymeren der Fa. Solvay (Eltex PKS 409), mit einem Ethylengehalt von 4,5 Gew.-% der Schmelzflußindex des Copolymeren liegt bei 3,7 g/10 min bei 230°C und 21,6 N Belastung (DIN 53 735).

Die Deckschicht der A-Seite bestand aus

50 Gew.-%   eines statistischen Ethylen-Propylen-Copolymeren der Fa.Solvay (Eltex PKS 409), mit einem Ethylengehalt von 4,5 Gew.-%

40 Gew.-%   eines Ethylen-Butylen-Copolymeren der Fa. Mitsui (Tafmer A 4085)

10 Gew.-%   eines LDPE der Fa. Borealis LE 4004

Die Deckschicht der D-Seite bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134°C, wobei der Schmelzflußindex 7,0 g/10 min betrug.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat.

Die extrudierte Vierschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

Extrusion:          Extrusionstemperatur 260°C
Längsstreckung:     Streckwalze T = 135°C
                    Längsstreckung um den Faktor 6
                    Querstreckung: Aufheizfelder T = 180°C

Streckfelder T = 177°C

Querstreckung um den Faktor 8

Fixierung: Temperatur T = 155°C

Coronabehandlung: Spannung: 10 000 V

Frequenz: 10 000 Hz

Die so hergestellte Mehrschichtfolie wies direkt nach der Herstellung eine Oberflächenspannung von 40 bis 41 mN/m auf (D-Seite). Die Folie war ca. 56 $\mu$m dick, wobei die Dicke der A-Schicht etwa 1,5 $\mu$m, die der D-Schicht etwa 0,5 $\mu$m und die Dicke der Zwischenschicht C ca. 4 $\mu$m betrug.

Vergleichsbeispiel

Beispiel 1 wurde ohne Zwischenschicht wiederholt, das heißt es wurde eine nur dreischichtige Folie hergestellt welche die gleiche Basisschicht und die gleichen Deckschichten A und D wie in Beispiel 1 beschrieben aufweißt.

Anwendungstechnische Ausprüfung

Zur Charakterisierung der Rohstoffe und der Folien wurden die folgenden Meßmethoden benutzt:

Schmelzflußindex

Der Schmeizflußindex wurde nach DIN 53 735 bei 21,6 N Belastung und 230°C gemessen.

Schmelzpunkte

DSC-Messung, Maxima der Schmelzkurve, Aufheizgeschwindigkeit 20 °K/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

Platzdruck

Zur Bestimmung des Platzdruck wird der mittels Deckelfolie verschlossene Becher aufgeblasen bis die Becher, Siegelnaht oder Deckel durch Rißbildung platzen.

Siegelnahtfestigkeit und Peelfestigkeit

Zur Bestimmung der Nahtfestigkeit der Folie wurden zwei 15 mm breite Folienstreifen übereinandergelegt und bei 130°C, einer Siegelzeit von 0,5 s und einem Siegeldruck von 10 N/mm$^2$ (Gerät: Brugger Typ NDS, einseitig beheizte Siegelbacke) versiegelt. Die Siegelnahtfestigkeit wurde nach der T-Peel-Methode bestimmt.

Zur Bestimmung der Siegelnahtfestigkeit gegenüber Bechern aus Propylen Homopolymeren wird die Folie mit der Peelschicht auf den Becherrand eines PP-Bechers bei 30 N/cm$^2$ und 0,5 sec. Die Bestimmung der Peelfestigkeit erfolgt nach der T-Peelmethode.

Dichte

Die Dichte wird nach DIN 53 479, Verfahren A, bestimmt.

Hot-Tack

"Hot-Tack" bezeichnet die Festigkeit einer noch heißen Siegelnaht unmittelbar nach dem Öffnen der Siegelwerkzeuge. Zur Bestimmung werden zwei Folienzuschnitte von 530 mm übereinandergelegt und an den Enden mit einem Klammergewicht G von 100 g fixiert. Ein Flachspatel wird zwischen die Folienlagen gesteckt, und der Meßstreifen wird

EP 0 781 652 A2

über zwei Umlenkrollen zwischen die Siegelbacken geführt. Anschließend wird die Siegelung ausgelöst, wobei der Spatel zwischen den Lagen herausgezogen wird, sobald die Siegelbacken geschlossen sind. Als Siegelbedingungen werden 150°C für die Siegeltemperatur, 0,5 s für die Siegelzeit und 30 N/cm$^2$ für den Anpreßdruck eingestellt. Nach Ende der Siegelzeit von 0,5 s öffnen sich die Siegelbacken (Fläche: 20 cm$^2$) selbständig, und der gesiegelte Meßstreifen wird durch das Belastungsgewicht ruckartig bis zur Umlenkrolle vorgezogen und dabei unter einem Trennwinkel von 180° gespalten. Als Hot-Tack wird die Tiefe der Delaminierung der Siegelnaht in mm angegeben, die sie bei der vorgegebenen Krafteinwirkung erfährt.

Bestimmung der Siegelanspringtemperatur

Mit einem Siegelgerät werden Folienproben bei unterschiedlichen Temperaturen mit Hilfe einer beheizten Siegelbacke bei einem Siegeldruck von 10 N/cm$^2$ und einer Siegeldauer von 0,5 s auf PP-Becher gesiegelt wird. Die Siegelnahtfestigkeit, d. h. die zur Trennung des Deckels vom Becher bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert. WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.
In der nachstehenden Tabelle sind die Eigenschaften der Mehrschichtfolien der Beispiele zusammengefaßt.

Tabelle

|  | Beispiel 1 | Vergleichsbeispiel |
|---|---|---|
| Siegelanspringtemperatur | 160C | 170C |
| Platzdruck | 0,5 bar | 0,3 bar |
| Häutchenbildung | keine | ja |

**Patentansprüche**

1. Peelfähige, orientierte, opake, coextrudierte Polyolefin-Mehrschichtfolie aus mindestens drei coextrudierten Schichten, dadurch gekennzeichnet, daß sie den folgenden Schichtaufbau umfaßt:

   a) eine opake Basisschicht und
   b) eine peelfähige Deckschicht die mindestens zwei unverträgliche olefinische Polymere in einerMenge von mindestens 70 Gew.-%, bezogen auf das Gewicht der Deckschicht, enthält und
   c) eine weiche Zwischenschicht die zwischen der Basisschicht und der peelfähigen Deckschicht angebracht ist.

2. Mehrschichtfolie nach Anspruch 1, dadurch gekennzeichnet, daß die opake Basisschicht der Folie Polyolefin, vorzugsweise Polypropylen, in einer Menge von mindestens 50 Gew.-%, vorzugsweise 75 bis 98 Gew.-%, bezogen auf das Gewicht der opaken Basisschicht, enthält.

3. Mehrschichtfolie nach Anspruch 1 und/oder 2, dadurch gekennzeichnet, daß die opake Basisschicht der Mehrschichtfolie Füllstoffe in einer Menge von maximal 40 Gew.-%, vorzugsweise 1 bis 30 Gew.-%, enthält.

4. Mehrschichtfolie nach einem oder mehreren der Ansprüche 1 bis 3, dadurch gekennzeichnet, daß die Basisschicht

EP 0 781 652 A2

Pigmente mit einem mittleren Teilchendurchmesser von 0,01 bis 1 $\mu$m, vorzugsweise 0,01 bis 0,7 $\mu$m, enthält.

5. Mehrschichtfolie nach einem oder mehreren der Ansprüche 1 bis 4, dadurch gekennzeichnet, daß die Basisschicht vakuoleninizierende Füllstoffe mit einem mittleren Teilchendurchmesser von 1 bis 6 $\mu$m enthält.

6. Mehrschichtfolie nach einem oder mehreren der Ansprüche 1 bis 5, dadurch gekennzeichnet, daß die peelfähige Deckschicht im wesentlichen eine Mischung aus zwei unverträglichen Polymeren (Komponente I und II) enthält.

7. Mehrschichtfolie nach einem oder mehreren der Ansprüche 1 bis 6, dadurch gekennzeichnet, daß die Komponente I

ein Propylenhomopolymer oder
ein Copolymer von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10
Kohlenstoffatomen oder

ein Terpolymer von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

ist.

8. Mehrschichtfolie nach einem oder mehreren der Ansprüche 1 bis 7, dadurch gekennzeichnet, daß die Komponente II ein mit der Komponente I unverträgliches olefinisches Polymer, vorzugsweise ein HDPE, MDPE, LDPE, LLDPE, VLDPE, ist.

9. Mehrschichtfolie nach einem oder mehreren der Ansprüche 1 bis 8, dadurch gekennzeichnet, daß die Mischung aus den beiden unverträglichen Polymeren zwei separate Schmelzpeaks aufweist, wobei der erste Schmelzpeak im Bereich von 105 bis 135°C und der zweite Schmelzpeak im Bereich von 120 bis 140°C liegt.

10. Mehrschichtfolie nach einem oder mehreren der Ansprüche 1 bis 9, dadurch gekennzeichnet, daß die Zwischenschicht mindestens 80 Gew.-% eines Polyolefins enthält, welches einen niedrigen Schmelzpunkt oder eine niedrigere Glasübergangstemperatur als das Polyolefin der Basisschicht hat.

11. Mehrschichtfolie nach Anspruch 10, dadurch gekennzeichnet, daß der Schmelzpunkt oder die Glasübergangstemperatur des Polyolefins der Zwischenschicht mindestens 10°C, vorzugsweise 15 bis 60°C niedriger als der Schmelzpunkt des Polyolefins der Basisschicht ist.

12. Mehrschichtfolie nach einem oder mehreren der Ansprüche 1 bis 11, dadurch gekennzeichnet, daß das Polyolefin der Zwischenschicht eine niedrigere Kristallinität als das Polyolefin der Basisschicht hat.

13. Mehrschichtfolie nach einem oder mehreren der Ansprüche 1 bis 12, dadurch gekennzeichnet, daß die Zwischenschicht eine Dicke von 2 bis 12 $\mu$m aufweist.

14. Mehrschichtfolie nach einem oder mehreren der Ansprüche 1 bis 13, dadurch gekennzeichnet, daß das Polyolefin der Zwischenschicht kristallin, teilkristallin oder amorph ist.

15. Mehrschichtfolie nach einem oder mehreren der Ansprüche 1 bis 14, dadurch gekennzeichnet, daß das Polyolefin der Zwischenschicht überwiegend aus Propyleneinheiten und mindestens einem weiteren Olefin, vorzugsweise

14

Ethylen und/oder Butylen aufgebaut ist.

**16.** Mehrschichtfolie nach Anspruch 15, dadurch gekennzeichnet, daß das Polyolefin mindestens 60 Gew.-%, vorzugsweise 75 bis 98 Gew.-%, bezogen auf das Gewicht des Polyolefins, Propyleneinheiten enthält.

**17.** Mehrschichtfolie nach einem oder mehreren der Ansprüche 1 bis 14, dadurch gekennzeichnet, daß das Polyolefin überwiegend aus Ethyleneinheiten und gegebenenfalls aus weiteren Olefinen aufgebaut ist.

**18.** Mehrschichtfolie nach Anspruch 17, dadurch gekennzeichnet, daß das Polyolefin mindestens 50 Gew.-%, vorzugsweise 75 bis 100 Gew.-%, insbesondere 90 bis 98 Gew.-% Ethyleneinheiten enthält.

**19.** Verfahren zur Herstellung einer Mehrschichtfolie nach Anspruch 1.

**20.** Verwendung einer Mehrschichtfolie nach Anspruch 1 als Deckelfolie für Behältnisse, vorzusweise Lebensmittelbehältnisse.

**21.** Behältnis, vorzugweise Lebensmittelbehältnis, mit einer Deckelfolie nach Anspruch 1.

**22.** Peelfähiger Deckel aus einer Folie nach Anspruch 1, vorzugsweise mit einer Bedruckung versehen.